# EUROPEAN PATENT APPLICATION

(11) **EP 1 703 508 A2**
(43) Date of publication of application: **20.09.2006**
(21) Application number: 06005223.0
(22) Date of filing: 14.03.2006
(51) Int. Cl.: G11B 20/12

(54) **Optical disc recording/reproduction apparatus**

(30) Priority: 14.03.2005 JP 2005070345
(71) Applicant: Funai Electric Co., Ltd., Daito-shi Osaka 574-0013 (JP)
(72) Inventor: Arashi, Masahiko, Daito-shi Osaka 574-0013 (JP)
(74) Representative: Beetz & Partner

(57) **Abstract**

After a recording process is started, encoded data of one VOBU, for example, is stored in a buffer memory 32, and then it is read from the buffer memory 32 and is then written to an optical disc 1. If a write error occurs during the writing, an error occurrence sector address is set as a next write sector address. When the next write sector address is different from a next writable sector address, two ECC blocks are added to the next write sector address, and, after the two ECC blocks are rewritten to invalid sectors, at the time of resumption of writing, a memory address too is set back to a memory address at the time of occurrence of a write error. After a memory address is set back in such a manner as described above, when the number of continuous errors is less than a predetermined number, the encoded data is recorded from a resume write sector address.

## Description

### BACKGROUND OF THE INVENTION

### 1. Field of the Invention

The present invention relates to an optical disc recording/reproduction apparatus that performs recording and reproducing information on and from an optical disc, and more particularly to a recording recovery process to be performed at the time of occurrence of a write error while writing information to an optical disc.

### 2. Description of Related Art

In recent years, DVDs (digital versatile discs), which are optical discs that can record information such as a large amount of video/audio data like that of movies, have been increasingly widespread. As these DVDs, various types are known such as DVDs exemplified by DVD-ROMs containing information that is pre-recorded by a manufacturer and cannot be rewritten by a user, DVDs exemplified by DVD-Rs that allows the user to record information thereon only once, and DVDs exemplified by DVD-RWs (DVD-RAMs) that allows the user to record information thereon and rewrite it many times. Information recorded on these DVDs can be reproduced by DVD players or DVD recorders, and information can be recorded on DVDs such as DVD-Rs or DVD-RWs (DVD-RAMs) by using optical disc recording/reproduction apparatuses such as DVD recorders.

Here, in the optical disc recording/reproduction apparatuses such as DVD recorders, when a write is unsuccessful at a certain address while recording information on a rewritable optical disc such as a DVD-RW and whereby a write error occurs, the write is performed again (a write retry) at the same address a plurality of times. When the write retries end up in failure, the write is aborted by the occurrence of an error. However, a defective sector may appear while such a write retry is repeated a number of times, preventing data recorded on the rewritable optical disc from being reproduced correctly.

If a defective sector appears in a control data area, it may invalidate control data, and if a defective sector appears in video data in a video object unit (VOBU), it may cause freezing or poor quality in video. If a defective sector appears in audio data in a video object unit (VOBU), it may distort audio or cause noise, and if a defective sector appears in a menu area, it may damage a menu.

To reduce the number of write retries and thereby prevent data reproduction trouble caused by a defective sector, a method of writing a stream of commands is known that is provided with a step of protecting, in a data buffer (a buffer memory), write data of a sector at which a write was unsuccessful, and a step of writing, after executing a stream of commands, the protected sector write data to a storage medium with a head (see JP-A-2004-335020).

On the other hand, a DVD system is known that is provided with means for allocating a first sector block including logically continuous sectors so that inseparable data selected from at least one of groups including control data, backup control data, or navigation data is stored in a recordable DVD medium, means for detecting and locating a defective sector in the first sector block, and means for moving, when detecting and locating the defective sector, the inseparable data from the first sector block to a second sector block in the recordable DVD medium, the second sector block of logically continuous sectors in which the detected and located defective sector is not included (JP-A-2003-514329).

In short, in the conventional technique disclosed in JP-A-2004-335020, when a record error (a write error) of data to be recorded on an optical disc occurs, a write is continued by skipping over the write error data, and a write retry is performed later where the write error occurred. That is, in this conventional technique, a sector block at which the write was unsuccessful is protected so as not to be damaged, and a write retry is performed later at the sector block where the write was unsuccessful. In other words, data is first written only to a writable sector block on an optical disc, and a write retry is performed later at a sector block where the write was unsuccessful.

However, even when a write retry is performed many times at a sector block where a write error occurred, there is a high possibility that data cannot be written to that sector block when it gets scratched or collects dust, for example, and therefore recording has to be discontinued. This results in poor user usability.

In the conventional technique disclosed in JP-A-2004-335020, when a write retry does not achieve a successful write, unsuccessful write data of the data accumulated in a data buffer (a buffer memory) is protected, and then a write retry is performed for the protected data. When the write is still unsuccessful, another medium is set, and the data is written to that medium. However, this makes a reproducing process complicated, because various recording locations to which data was written by write retries have to be invoked at the time of data reproduction.

On the other hand, in the conventional technique disclosed in JP-A-2003-514329, if there is a defective sector at the time of writing of inseparable data selected from at least one of groups including control data, backup control data, or navigation data, the inseparable data is written to a next logically continuous sectors. However, a write retry of encoded data of a video/audio signal is not disclosed therein, and therefore it is impossible to solve the problems described above.

### SUMMARY OF THE INVENTION

In view of the conventionally experienced problems described above, it is an object of the present invention to provide an optical disc recording/reproduction apparatus that can perform recording as continuously as possible when information is recorded on an optical disc by improving recording recovery at the time of occurrence of a record error and thereby preventing recording interruption, for example, as much as possible.

To achieve the above object, an optical disc recording/reproduction apparatus of the present invention includes an optical pickup that performs recording/reproduction of information with respect to an optical disc, and a system controller that retrieves an error occurrence sector address when a write error occurs while recording information on the optical disc by using the optical pickup, and performs a write of encoded data to be recorded, at the time of resumption of writing, from a resume write sector address obtained by adding a predetermined number of ECC blocks to the error occurrence sector address.

In the optical disc recording/reproduction apparatus structured as described above, the system controller includes: write data checking means that checks the buffer memory for write data that is stored therein as a result of a predetermined amount of encoded data, that is, data obtained by encoding an input information signal to be recoded, being stored in the buffer memory after a recording process is started with respect to the optical disc; data write means that writes data to the optical disc when the write data checking means recognizes the presence of write data; address setting means that retrieves the error occurrence sector address from a front-end processor if a write error occurs when data is being written by the data write means, and sets the error occurrence sector address as a next write sector address; address checking means that checks whether or not the next write sector address and a next writable sector address retrieved from the front-end processor are identical to each other; block addition means that adds two ECC blocks to the next write sector address when the address checking means recognizes that the next write sector address is different from the next writable sector address, and thus obtains the resume write sector address; sector rewrite means that rewrites the two ECC blocks added by the block addition means to invalid sectors; memory address set back means that calculates the amount of unrecorded encoded data by multiplying by 2048 bytes a sector address obtained by subtracting the error occurrence sector address from a specified write sector address and sets a memory address back by the amount of unrecorded encoded data, because a memory address in which encoded data is stored to be read from the buffer memory at the time of resumption of writing too has to be set back to a memory address of the buffer memory at the time of occurrence of a write error; and recording resume/stop means that, after a memory address is set back by the memory address set back means, makes the data write means continue a recording process from the resume write sector address when the number of continuous errors is less than a predetermined number, and stops a recording process when the number of continuous errors reaches a predetermined number.

According to the present invention, the optical disc recording/reproduction apparatus that performs recording/reproduction of information with respect to an optical disc is provided with a system controller that retrieves an error occurrence sector address when a write error occurs while recording information on the optical disc by using the optical pickup, and performs a write of encoded data to be recorded, at the time of resumption of writing, from a resume write sector address obtained by adding a predetermined number of ECC blocks to the error occurrence sector address. This makes it possible to write encoded data to a resume write sector address obtained by adding a predetermined number of ECC blocks to an error occurrence sector address when a write error occurs while recording information on an optical disc. This makes it possible to improve recording recovery at the time of occurrence of a record error and prevent recording interruption, for example, as much as possible, whereby it is possible to perform recording as continuously as possible when information is recorded on an optical disc. This improves user usability.

According to the present invention, the system controller includes: write data checking means that checks the buffer memory for write data that is stored therein as a result of a predetermined amount of encoded data, that is, data obtained by encoding an input information signal to be recoded, being stored in the buffer memory after a recording process is started with respect to the optical disc; data write means that writes data to the optical disc when the write data checking means recognizes the presence of write data; address setting means that retrieves the error occurrence sector address from a front-end processor if a write error occurs when data is being written by the data write means, and sets the error occurrence sector address as a next write sector address; address checking means that checks whether or not the next write sector address and a next writable sector address retrieved from the front-end processor are identical to each other; block addition means that adds two ECC blocks to the next write sector address when the address checking means recognizes that the next write sector address is different from the next writable sector address, and thus obtains the resume write sector address; sector rewrite means that rewrites the two ECC blocks added by the block addition means to invalid sectors; memory address set back means that calculates the amount of unrecorded encoded data by multiplying by 2048 bytes a sector address obtained by subtracting the error occurrence sector address from a specified write sector address and sets a memory address back by the amount of unrecorded encoded data, because a memory address in which encoded data is stored to be read from the buffer memory at the time of resumption of writing too has to be set back to a memory address of the buffer memory at the time of occurrence of a write error; and recording resume/stop means that, after a memory address is set back by the memory address set back means, makes the data write means continue a recording process from the resume write sector address when the number of continuous errors is less than a predetermined number, and stops a recording process when the number of continuous errors reaches a predetermined number. This makes it possible to write encoded data to a resume write sector address obtained by adding two ECC blocks to an error occurrence sector address when a write error occurs while recording information on an optical disc. This makes it possible to improve recording recovery at the time of occurrence of a record error and prevent recording interruption, for example, as much as possible, whereby it is possible to perform recording as continuously as possible when information is recorded on an optical disc. This improves user usability.

### BRIEF DESCRIPTION OF THE DRAWINGS

Fig. 1 is a block diagram showing the structure of the optical disc recording/reproduction apparatus of one embodiment of the present invention.
Fig. 2 is a diagram showing the structure of data recorded on a DVD, which is an optical disc, in the embodiment.
Fig. 3 is a diagram showing the structure of data to be recorded for describing a recording recovery process of the embodiment.
Fig. 4 is a diagram for describing a position of a pointer which is set when encoded data is written to a buffer memory in the embodiment.
Fig. 5 is a flowchart for describing a recording recovery process in a VR mode in the embodiment.

### DETAILED DESCRIPTION OF PREFERRED EMBODIMENTS

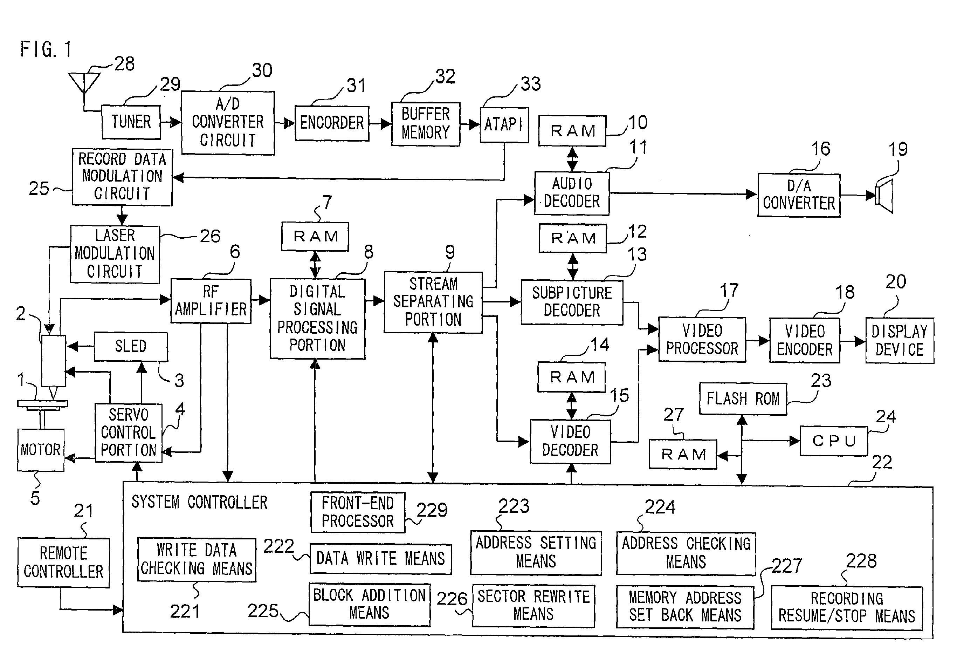

Hereinafter, an embodiment of the present invention will be described with reference to the accompanying drawings. Fig. 1 is a block diagram showing the structure of the optical disc recording/reproduction apparatus of one embodiment of the present invention.

This optical disc recording/reproduction apparatus includes: a spindle motor 5 that rotates an optical disc 1; an optical pickup 2 that optically performs a write/read of information to the optical disc 1; a sled 3 that moves the optical pickup 2 in a radial direction of the optical disc 1; and a servo control portion 4 that drives the spindle motor 5 and the sled 3 according to instructions from a system controller 22 and moves a focus position of laser light in vertical and horizontal directions relative to a recording plane of the optical disc 1 by moving an objective lens (not shown) built in the optical pickup 2.

The optical disc recording/reproduction apparatus further includes: an RF amplifier 6 that amplifies, when the optical disc 1 is played back, an RF signal that is a read signal transmitted from the optical pickup 2; a digital signal processing portion 8 that stores, in a RAM 7, data generated by performing a signal demodulating process and an error correcting process according to a data format of the optical disc 1 after converting the RF signal outputted from the RF amplifier 6 to digital data; and a stream separating portion 9 that separates audio data, subpicture data, and video data from a data stream outputted from the digital signal processing portion 8 according to instructions from the system controller 22.

The optical disc recording/reproduction apparatus further includes: an audio decoder 11 that performs a predetermined decoding process by receiving audio data outputted from the stream separating portion 9; a RAM 10 that temporarily stores data for making the audio decoder 11 perform a decoding process; a subpicture decoder 13 that performs a predetermined decoding process by receiving subpicture data outputted from the stream separating portion 9; a RAM 12 that temporarily stores data for making the subpicture decoder 13 perform a decoding process; a video decoder 15 that performs a predetermined decoding process by receiving video data outputted from the stream separating portion 9; and a RAM 14 that temporarily stores data for making the video decoder 15 perform a decoding process.

The optical disc recording/reproduction apparatus further includes: a video processor 17 that synchronizes data outputted from the video decoder 15 and data outputted from the subpicture decoder 13 according to instructions from the system controller 22; a video encoder 18 that converts synthesized data outputted from the video processor 17 to a video signal for display and causes a display device 20 to display an image; and a D/A converter 16 that converts data outputted from the audio decoder 11 to an analog audio signal and feeds it to a loudspeaker 19, for example.

The optical disc recording/reproduction apparatus further includes: a remote controller 21 including various operation keys such as a record key, a reproduction key, and a stop key that provide a recording instruction, a reproduction instruction, and a recording and reproduction stop instruction, respectively, to the system controller 22; and the system controller 22 that controls the whole apparatus. The optical disc recording/reproduction apparatus further includes: a flash ROM 23 in which a program or data is stored for controlling individual components of the apparatus and controlling the whole apparatus; a CPU 24 that controls the system controller 22 by performing arithmetic operations according to the program or data stored in the flash ROM 23; and a RAM 27 that temporarily stores data necessary for arithmetic operations performed by the CPU 24.

The optical disc recording/reproduction apparatus further includes: a tuner 29 connected to an antenna 28; an A/D converter circuit 30 that converts an analog video/audio signal of a television broadcast selected by the tuner 29 or a video/audio signal from a television receiver or other video/audio output devices, which are not shown in the drawing, to digital video/audio data; an encoder 31 that encodes the video/audio data; a buffer memory 32 that temporarily stores a predetermined amount of encoded video/audio data (hereinafter referred to as encoded data); an ATAPI (AT Attachment Packet Interface) 33 that is an interface between the buffer memory 32 and a record data modulation circuit 25; the record data modulation circuit 25 that modulates encoded data transmitted from the ATAPI 33 so that it can be recorded on the optical disc 1; and a laser modulation circuit 26 that outputs a laser modulation signal to the optical pickup 2 for modulating laser light emitted from the optical pickup 2 based on the modulated data modulated by the record data modulation circuit 25.

The system controller 22 includes the following components characterizing this embodiment: write data checking means 221 that checks the buffer memory 32 for write data that is stored therein as a result of a predetermined amount of encoded data -- data obtained by encoding an input information signal to be recorded -- being stored in the buffer memory 32 after a recording process is started with respect to the optical disc 1; data write means 222 that writes data to the optical disc 1 when the write data checking means 221 recognizes the presence of write data; address setting means 223 that retrieves an error occurrence sector address from a front-end processor 229 if a write error occurs when data is being written by the data write means 222 and sets the error occurrence sector address as a next write sector address; and address checking means 224 that checks whether or not the next write sector address and a next writable sector address retrieved from the front-end processor 229 are identical to each other.

The system controller 22 further includes: block addition means 225 that adds two ECC blocks to the next write sector address when the address checking means 224 recognizes that the next write sector address is different from the next writable sector address, and thereby obtaining a resume write sector address; sector rewrite means 226 that rewrites the two ECC blocks added by the block addition means 225 to invalid sectors; memory address set back means 227 that calculates the amount of unrecorded encoded data by multiplying by 2048 bytes a sector address obtained by subtracting the error occurrence sector address from a specified write sector address and sets a memory address back by the amount of unrecorded encoded data, because a memory address in which encoded data is stored to be read from the buffer memory 32 at the time of resumption of writing too has to be set back to a memory address of the buffer memory 32 at the time of occurrence of a write error; and recording resume/stop means 228 that, after a memory address is set back by the memory address set back means 227, makes the data write means 222 continue a recording process from the resume write sector address when the number of continuous errors is less than a predetermined number, and stops a recording process when the number of continuous errors reaches a predetermined number. In the system controller 22 structured as described above, the front-end processor 229 controls the write data checking means 221, the data write means 222, the address setting means 223, the address checking means 224, the block addition means 225, the sector rewrite means 226, the memory address set back means 227, and the recording resume/stop means 228.

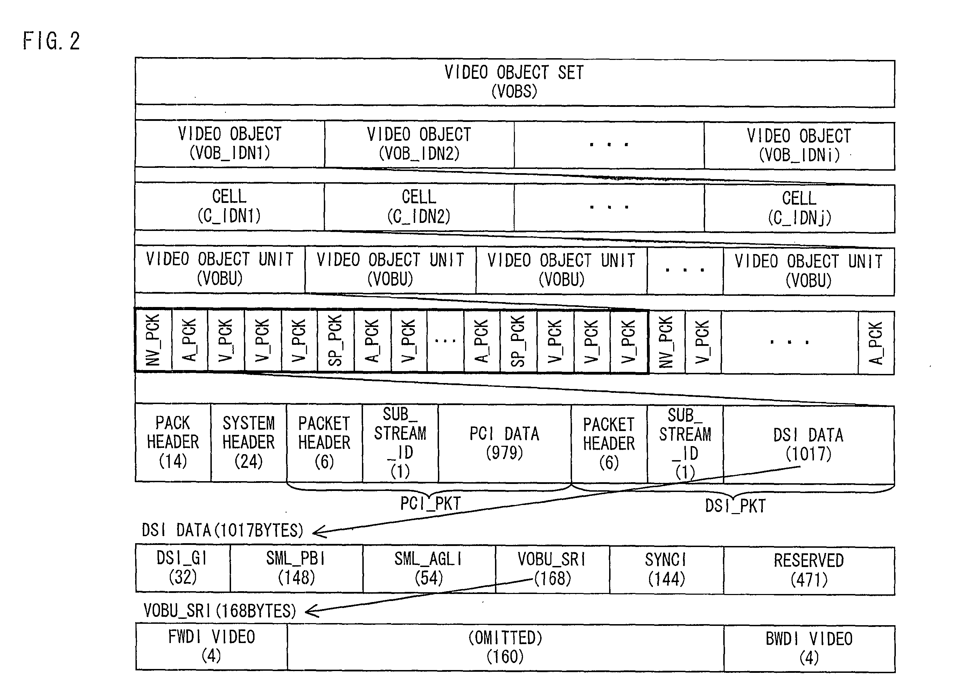

Fig. 2 is a diagram showing the structure of data recorded on a DVD, which is the optical disc 1, in this embodiment. In Fig. 2, a video object set (VOBS) consists of a plurality of video objects (VOBs), that is, (VOB_IDN1), (VOB_IDN2),···, (VOB_IDNi). Note that IDN1, IDN2,···, IDNi indicate identification numbers. Each video object (VOB) consists of a plurality of cells, that is, (C_IDNl), (C_IDN2),···, (C_IDNj). Note that IDN1, IDN2,···, IDNj indicate identification numbers.

For example, a cell (C_IDN1) consists of a plurality of video object units (VOBUs). Each video object unit (VOBU) includes a navigation pack (NV_PCK), an audio pack (A_PCK), a video pack (V_PCK), and a subpicture pack (SP_PCK).

The navigation pack (NV_PCK) and the audio pack (A_PCK) consist of 2048 bytes, for example. For example, the navigation pack (NV_PCK) and the audio pack (A_PCK) consist of 14 bytes of pack header (Pack header), 24 bytes of system header (System header), 6 bytes of packet header (Packet header), 1 byte of substream identifier (Sub_stream_id), 979 bytes of play control information data (PCI data), 6 bytes of packet header (Packet header), 1 byte of substream identifier (Sub_stream_id), and 1017 bytes of data search information data (DSI data).

6 bytes of packet header (Packet header), 1 byte of substream identifier (Sub_stream_id), 979 bytes of play control information data (PCI data) constitute a play control packet (PCI_PKT). 6 bytes of packet header (Packet header), 1 byte of substream identifier (Sub_stream_id), and 1017 bytes of data search information data (DSI data) constitute a data search information packet (DSI_PKT).

The data search information data (DSI data) of 1017 bytes consists of 32 bytes of data search information general information, 148 bytes of seamless playback information (SML_PBI), 54 bytes of seamless angle information (SML_AGLI), 168 bytes of video object unit search information (VOBU_SRI), 144 bytes of synchronization information (SYNCI), and 471 bytes of reserved.

The video object unit search information (VOBU _SRI) of 168 bytes consists of 4 bytes of video forward information (FWDI Video), 160 bytes of data area, and 4 bytes of video backward information (BWDI Video). The video forward information (FWDI Video) indicates a start address of a next video object unit (VOBU) in a video stream (a start address of a navigation pack). The video backward information (BWDI Video) indicates a start address of a previous video object unit (VOBU) in a video stream (a start address of a navigation pack).

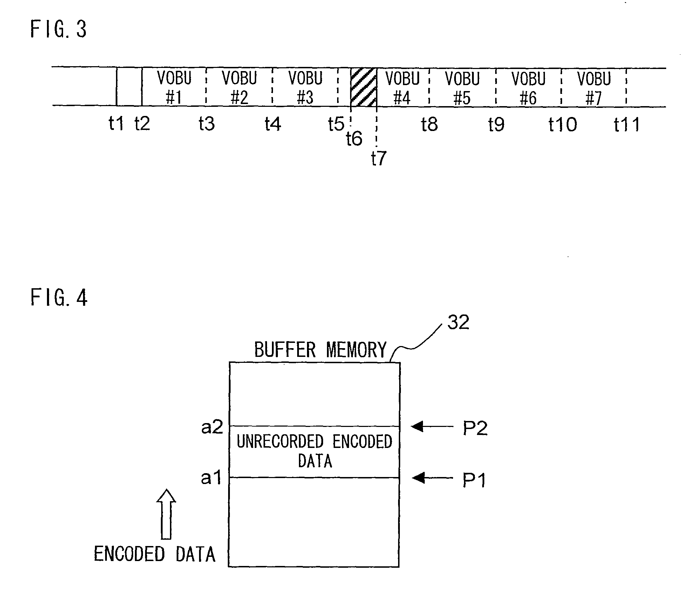

Fig. 3 is a diagram showing the structure of data to be recorded for describing a recording recovery process of this embodiment. In Fig. 3, up to time t1, a write of a video object unit (VOBU) has not yet been started, and, at time t2, the recording (the write of a video object unit (VOBU)) is started. During a period from time t1 to time t2, the power of laser light to be emitted from the optical pickup 2 is adjusted. During a period from time t2 to time t3, a video object unit (VOBU)#1 is recorded, during a period from time t3 to time t4, a video object unit (VOBU)#2 is recorded, during a period from time t4 to time t5, a video object unit (VOBU)#3 is recorded, during a period from time t5 to time t8, a video object unit (VOBU)#4 is recorded, during a period from time t8 to time t9, a video object unit (VOBU)#5 is recorded, during a period from time t9 to time t10, a video object unit (VOBU)#6 is recorded, and, during a period from time t10 to time t11, a video object unit (VOBU)#7 is recorded.

Here, of the period from time t5 to time t8, the region from time t6 to time t7 is the two ECC block region left blank as a result of the occurrence of the write error at time t6. Specifically, when a write error occurs at time t6 during the writing of a video object unit (VOBU)#4, the write of the rest of the video object unit (VOBU)#4 is resumed from a resume write sector address (an address at time t7) obtained by adding two ECC blocks to the address at time t6 (an error occurrence sector address). Then, during a period from time t7 to time t8, the rest of the video object unit (VOBU)#4 is recorded. In this way, a resume write sector address can be obtained by the following equation: (a resume write sector address) = (an error occurrence sector address) + (two ECC blocks). Note that the two ECC block region (the region from time t6 to time t7) is registered in the optical disc 1 as an invalid sector.

Fig. 4 is a diagram for describing a position of a pointer which is set when encoded data is written to the buffer memory 32 in this embodiment. In Fig. 4, P1 indicates a position of a pointer indicating a memory address on the buffer memory 32 corresponding to an error occurrence sector address at a time when a write error occurs on the optical disc 1, and P2 indicates a position of a pointer indicating a memory address on the buffer memory 32 corresponding to a specified write sector address at which to write the optical disc.

For example, in Figs. 3 and 4, if a write error occurs at time t6, encoded data stored in the region from a memory address a1 of the buffer memory 32 indicated by the pointer at the position P1 to a memory address a2 indicated by the pointer at the position P2 remains there without being recorded on the optical disc 1. This unrecorded encoded data has to be recorded on the optical disc 1, and therefore the pointer is set back to the position P1 from the position P2, and then the write is resumed at time t7, which is later than time t6 by the period corresponding to two ECC blocks.

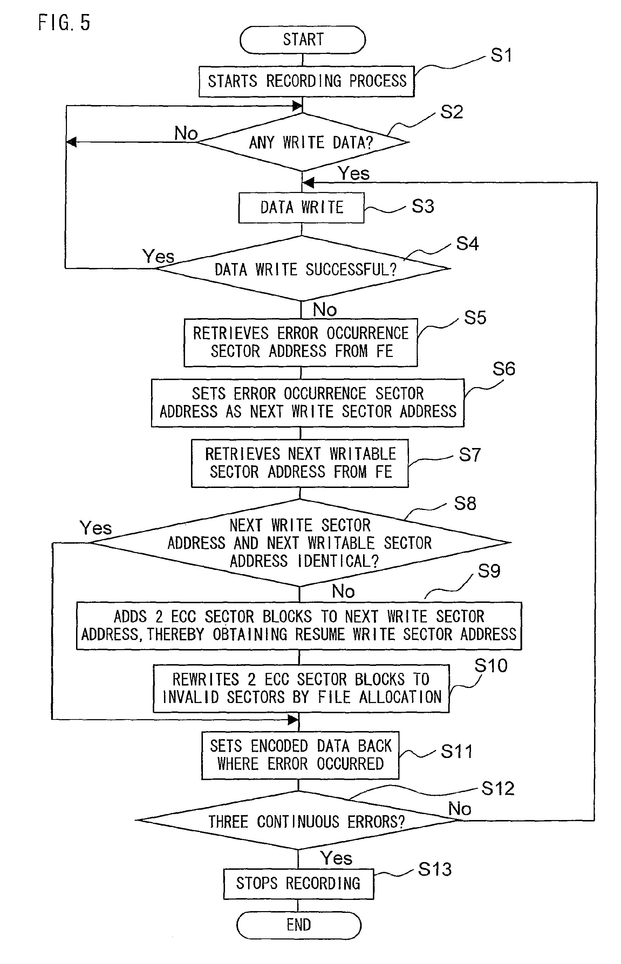

Fig. 5 is a flowchart for describing a recording recovery process in a VR (video recording) mode in this embodiment. With reference to this flowchart, a recording recovery process will be described.

First, a rewritable optical disc 1 such as a DVD-RW is loaded on the optical disc recording/reproduction apparatus. Then, in order to record a television program received by the antenna 28, for example, and selected by the tuner 29, the remote controller 21 is operated so as to set the optical disc recording/reproduction apparatus to a recording mode and make it start a recording process (step S1). When a recording process is started, a video/audio signal of the television program selected by the tuner 29 is converted to digital video/audio data by the A/D converter circuit 30, and then the video/audio data thus converted is encoded by the encoder 31.

A predetermined amount of this video/audio data (data of one VOBU (= 0.5 seconds' data)) thus encoded (hereinafter referred to as encoded data) is temporarily stored in the buffer memory 32. When the write data checking means 221 of the system controller 22 recognizes the presence of write data to be written to the optical disc 1 in the buffer memory 32 as a result of a predetermined amount of encoded data being stored in the buffer memory 32 (step S2), the data write means 222 of the system controller 22 reads a predetermined amount of encoded data from the buffer memory 32 and feeds it to the record data modulation circuit 25 via the ATAPI 33. Since the write to the optical disc 1 is performed on a video object unit (VOBU) basis, the read of a predetermined amount of encoded data from the buffer memory 32 is also performed on a video object unit (VOBU) basis.

The record data modulation circuit 25 modulates the encoded data fed from the ATAPI 33, and thereby obtains modulated data so as to record data on the optical disc 1. Then, the laser modulation circuit 26 outputs to the optical pickup 2 a laser modulation signal used for modulating laser light to be emitted from the optical pickup 2 based on the modulated data. As a result, modulated laser light is emitted from the optical pickup 2 and is then shone onto the recording plane of the optical disc 1, whereby the encoded video/audio data of the television program is written to the optical disc 1 (step S3).

When the above-described write is successful (step S4), the procedure proceeds back to step S2, where the same processing is performed for a predetermined amount of next encoded data stored in the buffer memory 32, and whereby this encoded data is written to the optical disc 1 (step S3). If a write error occurs while writing the encoded data to the optical disc 1 due to a scratch or dust, for example, on the recording plane of the optical disc 1, for example, as shown in Fig. 3, if a write error occurs in a video object unit (VOBU)#4 at time t6 while writing the encoded data, this writing process is not successful (step S4). This makes the address setting means 223 of the system controller 22 retrieve an error occurrence sector address from the front-end processor (in Fig. 5, denoted as FE) 229 at the time of occurrence of the write error (step S5), and sets the error occurrence sector address thus retrieved as a next write sector address (step S6).

Next, the address checking means 224 of the system controller 22 retrieves a next writable sector address from the front-end processor 229 (step S7), and checks whether or not the next write sector address and the next writable sector address are identical to each other (step S8). At this time, if the next write sector address and the next writable sector address are not identical to each other, the block addition means 225 of the system controller 22 adds two ECC blocks to the next write sector address (the error occurrence sector address), and thereby obtaining a resume write sector address (step S9). Note that, at step S8, the next write sector address is protected, because a write to a sector address whose address number is greater than that of the next writable sector address is impossible.

At step S9, the resume write sector address is obtained, and the sector rewrite means 226 of the system controller 22 rewrites the two ECC blocks added to the next write sector address (the error occurrence sector address) to invalid sectors by doing file allocation (step S10). As a result, the two ECC blocks become invalid at the time of playback, whereby it is possible to perform playback while skipping over the two ECC blocks.

After the two ECC blocks are rewritten to invalid sectors at step S10, or the next write sector address and the next writable sector address are recognized to be identical to each other at step S8, the memory address set back means 227 of the system controller 22 sets the encoded data back where the write error occurred (step S11). Specifically, the memory address set back means 227 calculates the mount of unrecorded encoded data based on a specified write sector address and the error occurrence sector address and sets a memory address back by the amount of unrecorded encoded data, because a memory address in which the encoded data is stored to be read from the buffer memory 32 at the time of resumption of writing has to be set back to a memory address of the buffer memory 32 at the time of occurrence of the write error. The amount of unrecorded encoded data can be obtained by the following equation: (the amount of unrecorded encoded data) = {(a specified write sector address) - (an error occurrence sector address)] × 2048 [bytes].

After a memory address is set back in such a manner as described above, if the number of continuous errors is less than a predetermined number (for example, three) (step S12), the recording resume/stop means 228 of the system controller 22 makes the procedure proceed back to step S3, thereby making the data write means 222 continue a recording process from the resume write sector address. On the other hand, if the number of continuous errors reaches a predetermined number (for example, three) (step S12), the recording resume/stop means 228 of the system controller 22 stops a recording process (step S13), thereby ending the recording recovery process.

As described above, according to this embodiment, when a write error occurs while recording information on the optical disc 1, encoded data is written to a resume write sector address obtained by adding two ECC blocks to an error occurrence sector address. This makes it possible to improve recording recovery at the time of occurrence of a record error and prevent recording interruption, for example, as much as possible, whereby it is possible to perform recording as continuously as possible when information is recorded on the optical disc 1. This improves user usability.

## Claims

1. An optical disc recording/reproduction apparatus comprising:
an optical pickup (2) that performs recording/reproduction of information with respect to an optical disc (1); and
a system controller (22) that retrieves an error occurrence sector address when a write error occurs while recording information on the optical disc (1) by using the optical pickup (2), and performs a write of encoded data to be recorded, at a time of resumption of writing, from a resume write sector address obtained by adding a predetermined number of ECC blocks to the error occurrence sector address.

2. The optical disc recording/reproduction apparatus of claim 1,
**characterized in that**, since a memory address in which encoded data is stored to be read from a buffer memory (32) at a time of resumption of writing too has to be set back to a memory address of the buffer memory at a time of occurrence of a write error, the system controller (22) calculates an amount of unrecorded encoded data based on a specified write sector address and the error occurrence sector address, then sets a memory address back by the amount of unrecorded encoded data, and then performs a write of the encoded data from the resume write sector address according to the memory address.

3. The optical disc recording/reproduction apparatus of claim 1 or 2,
**characterized in that** the predetermined number of ECC blocks to be added to the error occurrence sector address is two.

4. The optical disc recording/reproduction apparatus of any of the preceding claims,
**characterized in that** the system controller (22) includes
write data checking means (221) that checks the buffer memory for write data that is stored therein as a result of a predetermined amount of encoded data, that is, data obtained by encoding an input information signal to be recoded, being stored in the buffer memory after a recording process is started with respect to the optical disc, data write means (222) that writes data to the optical disc (1) when the write data checking means (221) recognizes a presence of write data,
address setting means (223) that retrieves the error occurrence sector address from a front-end processor if a write error occurs when data is being written by the data write means (222), and sets the error occurrence sector address as a next write sector address,
address checking means (224) that checks whether or not the next write sector address and a next writable sector address retrieved from the front-end processor are identical to each other,
block addition means (225) that adds two ECC blocks to the next write sector address when the address checking means recognizes that the next write sector address is different from the next writable sector address, and thus obtains the resume write sector address,
sector rewrite means (226) that rewrites the two ECC blocks added by the block addition means to invalid sectors,
memory address set back means (227) that calculates an amount of unrecorded encoded data by multiplying by 2048 bytes a sector address obtained by subtracting the error occurrence sector address from a specified write sector
address and sets a memory address back by the amount of unrecorded encoded data, because a memory address in which encoded data is stored to be read from the buffer memory (32) at a time of resumption of writing too has to be set back to a memory address of the buffer memory (32) at a time of occurrence of a write error, and recording resume/stop means (228) that, after a memory address is set back by the memory address set back means (227), makes the data write means continue a recording process from the resume write sector address when the number of continuous errors is less than a predetermined number, and stops a recording process when the number of continuous errors reaches a predetermined number.
